# EUROPEAN PATENT APPLICATION

(11) **EP 4 716 103 A1**
(43) Date of publication of application: **25.03.2026**
(21) Application number: 23937136.2
(22) Date of filing: 03.07.2023
(51) Int. Cl.: H04B 3/54

(54) **COMMUNICATION METHOD, APPARATUS AND SYSTEM**

(30) Priority: 18.05.2023 CN 202310566479
(71) Applicant: Sungrow (Shanghai) Co., Ltd., Shanghai 201107 (CN)
(72) Inventor: YANG, Hui, Shanghai 201107 (CN); HE, Yi, Shanghai 201107 (CN); YANG, Yu, Shanghai 201107 (CN); ZHANG, Gan, Shanghai 201107 (CN); YAO, Keliang, Shanghai 201107 (CN)
(74) Representative: Epping - Hermann - Fischer
(86) International application number: PCT/CN2023/105492
(87) International publication number: WO 2024/234460

(57) **Abstract**

The present invention provides a communication method, apparatus and system, applied to a master node. The method comprises: dividing a preset operating frequency range into multiple frequency bands; determining a slave node for communication corresponding to each frequency band; and according to a preset communication mode, communicating with the slave node corresponding to each frequency band. An operating frequency range can be divided into multiple frequency bands, communication with different slave nodes is performed in different frequency bands, and mutual influence is avoided, thereby improving the communication efficiency and reliability.

## Description

This application claims the priority to Chinese Patent Application No. 202310566479.4, titled "COMMUNICATION METHOD, APPARATUS AND SYSTEM", filed on May 18, 2023 with the China National Intellectual Property Administration, which is incorporated herein by reference in its entirety.

### FIELD

The present disclosure relates to the technical field of communications, and in particular to a communication method, a communication apparatus and a communication system.

### BACKGROUND

In a power station, multiple devices communicate via PLC (Power Line Communication) over a fixed frequency range. PLC utilizes a power line as a transmission channel, and transmits an analog signal or a digital signal through carrier wave at a high speed. The PLC between devices has high reliability. A device serves as a master node, other devices serve as slave nodes, and the master node is allowed to communicate with only one slave node at a time, which is a typical bus congestion communication. In this case, other slave nodes are unable to communicate with the master node, which greatly reduces the communication efficiency of node communication with one master node and multiple slave nodes. Even when there is a communication failure between the master node and the slave nodes, or when a PLC bus suffers from large noise interference, the PLC bus may always be occupied, causing other nodes to be unable to occupy the bus for communication, degrading the reliability of the PowerLine Communication. In severe cases, it may cause system collapse, resulting in substantial losses.

### SUMMARY

A communication method is provided according to the present disclosure. With the communication method, an operating frequency range may be divided into multiple frequency bands, a master node communicates with different slave nodes in different frequency bands, to avoid mutual influence between the slave nodes, and to improve the communication efficiency and reliability.

A communication method is applied to a communication system. The communication system includes at least one master node and at least one slave node. The communication method includes:
dividing, by the at least one master node, a preset operating frequency range into multiple frequency bands, where the operating frequency range is a frequency range in which the master node and the slave node are permitted to communicate with each other;
determining, by the at least one master node, at least one of the multiple slave nodes for communication corresponding to each frequency band of the multiple frequency bands; and
allowing the at least one master node to communicate with the at least one slave node corresponding to each frequency band in accordance with a preset communication manner, where the at least one master node communicates with the multiple slave nodes simultaneously through the multiple frequency bands during a communication process.

In an embodiment, the dividing the preset operating frequency range into the multiple frequency bands includes:
determining a quantity of the multiple slave nodes; and
dividing the operating frequency range into the multiple frequency bands based on the quantity of the slave nodes.

In an embodiment, the determining the at least slave node for communication corresponding to each frequency band includes:
determining a node number corresponding to each slave node of the multiple slave nodes, where the node number is a unique identification number of each slave node;
determining a sort order of the multiple slave nodes based on the node number corresponding to each slave node; and
determining the at least one slave node for communication corresponding to each frequency band based on the sort order of the multiple slave nodes.

In an embodiment, the communication method further includes:
configuring at least one frequency band of the multiple frequency bands as a broadcasting frequency band, where the broadcasting frequency band is a communication frequency band in which the master node communicates with the multiple slave nodes.

In an embodiment, the communicating with the at least one slave node corresponding to each frequency band in accordance with the preset communication manner includes:
generating a request message corresponding to each slave node of the multiple slave nodes;
   and
when the operating frequency at which a power line carrier operates belongs to a target frequency band,
determining at least one target slave node corresponding to the target frequency band; and sending the request message corresponding to the at least one target slave node to the at least one target slave node in accordance with the preset communication manner.

In an embodiment, for each of the multiple slave nodes, the generating the request message corresponding to the slave node includes:
acquiring data content of the master node, where the data content includes at least a machine number of the master node, a register starting address, and register data amount; and
generating the request message of the slave node based on the data content and a node number of the slave node.

In an embodiment, the communication manner includes at least one of broadcast, multicast, unicast, and heartbeat broadcast.

In an embodiment, the sending the request message corresponding to the target slave node to the target slave node in accordance with the preset communication manner includes at least one of:
broadcasting, in response to the communication manner being broadcast, the request message corresponding to the target slave node to the target slave node based on the machine number of the master node, where the machine number is to determine that the master node and the target slave node belong to the same network;
multicasting, in response to the communication manner being multicast, the request message corresponding to the target slave node to the target slave node based on a machine number of the master node and a string number in a node number of the target slave node, where the string number is to determine that at least one target slave node to receive the message request belongs to a same Boost string;
unicasting, in response to the communication manner being unicast, the request message corresponding to the target slave node to the target slave node based on the machine number of the master node and the node number of the target slave node; and
broadcasting, in response to the communication manner being heartbeat broadcast, the request message corresponding to the target slave node to the target slave node at a preset heartbeat time interval.

In an embodiment, the communication method further includes: obtaining a communication result for the master node to communicate with each slave node, where the communication result is a communication success or a communication failure.

In an embodiment, the obtaining the communication result for the master node to communicate with each slave node includes:
when the master node communicates with the slave node via broadcast or multicast, reading node information of the slave node and determining a communication result of the slave node based on the node information; and
when the master node communicates with the slave node via unicast or heartbeat broadcast, receiving, from the slave node, a response message and determining the communication result of the slave node based on the response message, where the response message is fed back by the slave node based on the request message corresponding to the slave node.

A communication apparatus is provided. The communication apparatus is applied to a communication system. The communication system includes at least one master node and at least one slave node. The communication apparatus includes:
a dividing unit, configured to divide a preset operating frequency range into multiple frequency bands, where the operating frequency range is a frequency range in which the master node and the slave node are permitted to communicate with each other;
a determination unit, configured to determine at least one slave node for communication from the multiple slave nodes corresponding to each frequency band of the multiple frequency bands; and
a communication unit, configured to communicate with the at least one slave node corresponding to each frequency band in accordance with a preset communication manner; where the at least one master node communicates with the multiple slave nodes simultaneously through the multiple frequency bands during a communication process.

In an embodiment, the dividing unit includes:
a first determination sub-unit, configured to determine a quantity of the multiple slave nodes;
   and
a dividing sub-unit, configured to divide the operating frequency range into multiple frequency bands based on the quantity of the multiple slave nodes.

In an embodiment, the determination unit includes:
a first acquisition sub-unit, configured to acquire a node number corresponding to each slave node of the multiple slave nodes, where the node number is a unique identification number of each slave node;
a second determination sub-unit, configured to determine a sort order of the multiple slave nodes based on the node number corresponding to each slave node; and
a third determination sub-unit, configured to determine the at least one slave node for communication corresponding to each frequency band based on the sort order of the multiple slave nodes.

In an embodiment, the communication unit is configured to send a request message corresponding to a target slave node to the target slave node in accordance with a preset communication manner, and for sending the request message corresponding to the target slave node to the target slave node in accordance with the preset communication manner, the communication unit is further configured to:
broadcast, in response to the communication manner being broadcast, the request message corresponding to the target slave node to the target slave node based on a machine number of the master node, where the machine number is to determine that the master node and the target slave node belong to a same network;
multicast, in response to the communication manner being multicast, the request message corresponding to the target slave node to the target slave node based on a machine number of the master node and a string number in a node number of the target slave node, where the string number is to determine that at least one target slave node to receive the message request belongs to a same Boost string;
unicast, in response to the communication manner being unicast, the request message corresponding to the target slave node to the target slave node based on a machine number of the master node and a node number of the target slave node; and
broadcast, in response to the communication manner being heartbeat broadcast, the request message corresponding to the target slave node to the target slave node at a preset heartbeat time interval.

A communication system includes at least one master node and at least one slave node. The at least one master node is configured to communicate with the at least one slave node and perform the communication method as described above. The at least one slave node is configured to receive a request message sent by the at least one master node during a process of communicating with the at least one master node.

In an embodiment, the at least one master node each is an inverter, and the at least one slave node each is an optimizer.

Compared with the conventional technology, the present disclosure has the following advantages.

A communication method is provided according to the present disclosure, which is applied to a master node. The communication method includes: dividing a preset operating frequency range into multiple frequency bands; determining a slave node for communication corresponding to each of the frequency bands; and communicating with the slave node corresponding to each frequency band in accordance with a preset communication manner. With the communication method, the operating frequency range can be divided into multiple frequency bands, the master node can communicate with different slave nodes in different frequency bands, avoiding mutual influence between the slave nodes, thereby improving the communication efficiency and reliability.

### BRIEF DESCRIPTION OF THE DRAWINGS

To illustrate technical solutions in embodiments of the present disclosure or in the conventional technology clearly, the drawings to be used in the description of the embodiments or the conventional technology are briefly described hereinafter. Apparently, the drawings in the following description show only embodiments of the present disclosure, and other drawings may be obtained by those skilled in the art from the provided drawing without any creative effort.
FIG. 1 is a flowchart of a communication method according to an embodiment of the present disclosure;
FIG. 2 is an exemplary diagram of a communication method according to an embodiment of the present disclosure;
FIG. 3 is a flowchart of a communication method according to another embodiment of the present disclosure;
FIG. 4 is a structural diagram of a communication apparatus according to an embodiment of the present disclosure;
FIG. 5 is a structural diagram of a communication system according to an embodiment of the present disclosure; and
FIG. 6 is a structural diagram of a communication system according to another embodiment of the present disclosure.

### DETAILED DESCRIPTION

Technical solutions in embodiments of the present disclosure are clearly and completely described hereinafter in conjunction with the drawings in the embodiments of the present disclosure. Apparently, the embodiments described in the following are only some embodiments of the present disclosure, rather than all embodiments. Any other embodiments obtained by those skilled in the art based on the embodiments of the present disclosure, without any creative effort, shall fall within the protection scope of the present disclosure.

In the present disclosure, the relationship terminologies such as "first" and "second" are only used to distinguish one entity or operation from another entity or operation, rather than to necessitate or imply an actual relationship or order between the entities or operations. Moreover, terms of "include", "comprise" or any other variants are intended to be non-exclusive. Therefore, a process, method, article or device including a series of elements includes not only the elements but also other elements that are not enumerated, or further includes the elements inherent for the process, method, article or device. Unless expressively limited, the statement "including a..." does not exclude the case that other similar elements may exist in the process, method, article or device including the series of elements.

The present disclosure is applicable to environments or configurations of various general or dedicated computing apparatuses, such as personal computers, server computers, handheld devices or portable devices, tablet devices, multi-processor apparatuses, or distributed computing environments including any of the listed apparatuses and devices.

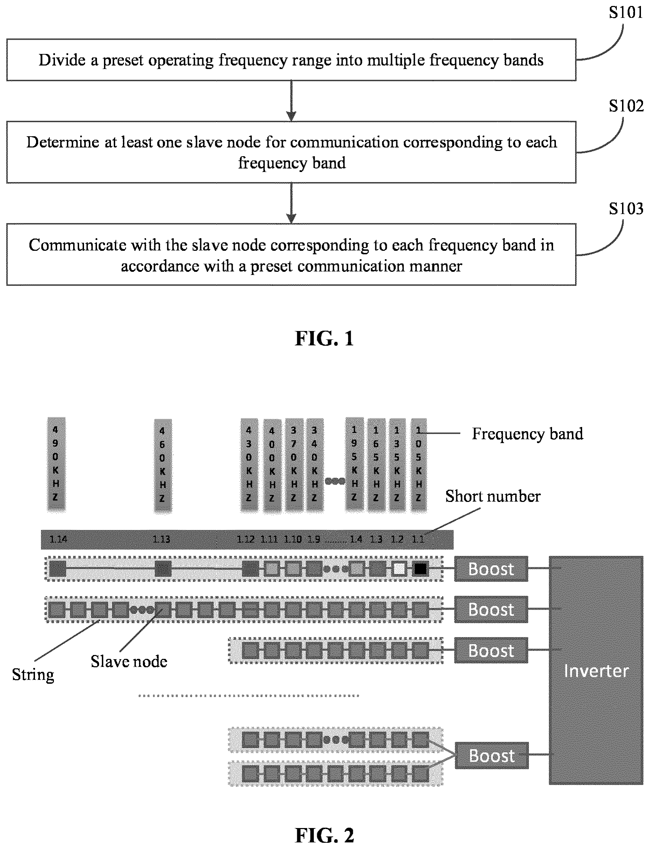

A communication method is provided according to the present disclosure. The communication method may be applied to a communication system. The communication system includes at least one master node and at least one slave node. The master node may be an inverter in a power system, specifically a controller in the inverter. The slave node may be an optimizer in the power system. A flowchart of the communication method is shown in FIG. 1, and includes steps S101, S102 and S103.

In step S101, a preset operating frequency range is divided into multiple frequency bands.

The operating frequency range is a frequency range in which the master node and the slave node are permitted to communicate with each other, and the operating frequency range is further an operating frequency range in which a power line carrier operates.

Specifically, the power line carrier operates over a frequency range of 80kHz to 490kHz.

In an embodiment of the present disclosure, the operating frequency range is divided into multiple frequency bands by: determining a quantity of the slave node; and dividing the operating frequency range into the multiple frequency bands based on the quantity of the slave node.

It should be understood that, the quantity of the slave node to communicate with the master node is determined. Based on the quantity of the slave node, the operating frequency range is evenly divided into multiple frequency bands, and a quantity of the multiple frequency bands is equal to the quantity of the slave node.

For example, if the operating frequency range is 80kHz to 490kHz and the quantity of the slave node is 15, the operating frequency range may be divided into 15 frequency bands (f=80+k×30kHz, k=0,...,14), and each frequency band corresponds to a channel for communication with the slave node. The frequency bands are spaced 30 kHz apart.

It should be noted that, the master node divides the operating frequency range into multiple frequency bands, and each frequency band serves as a channel for communication with the slave node. The master node may communicate with different slave nodes through different channels, that is, when the master node is required to communicate with a slave node, the master node communicates with the slave node through a channel corresponding to the slave node.

In step S102, at least one slave node for communication corresponding to each frequency band is determined.

Based on the content of step S101, a slave node corresponding to each frequency band is determined.

In an embodiment of the present disclosure, the slave node for communication corresponding to each frequency band is determined by: acquiring a node number corresponding to each slave node, where the node number is a unique identification number of the slave node; determining a sort order of all the slave nodes based on the node number corresponding to each slave node; and determining the slave node for communication corresponding to each frequency band based on the sort order of all the slave nodes.

It should be noted that, the node number of the slave node is composed of a string number and a sequence number of the slave node. Different slave nodes communicating with one master node have a same string number, and sequence numbers of slave nodes in one string are different from each other. The slave nodes communicating with one master node are sorted in an ascending order of the sequence numbers of the slave nodes, and each slave node corresponds to at least one frequency band. After each frequency band is obtained, the frequency bands are associated with all slave nodes based on the frequency ranges of the frequency bands. Alternatively the slave node may also be associated with another frequency band. That is, the master node communicates with the slave node through a frequency band associated with the slave node.

Specifically, for an inverter circuit, the inverter circuit includes multiple Boost strings, and each string corresponds to one index number (that is, a string number). The string includes multiple optimizers as slave nodes, and each slave node also has an index number in a string to which the slave node belongs to. Multiple optimizers in a string communicate with one inverter. The inverter is the master node. For example, the slave node with a node number of 1.14 represents the 14th optimizer in Boost1. If the operating frequency range is 80kHz to 490kHz and the quantity of the slave node is 15, based on the division of frequency bands, an operating frequency band in which the slave node with the node number is 1.14 and the master node communicate with each other is 490kHz.

In the present disclosure, for an inverter circuit in a power system, a controller for an inverter PLC master node may communicate with and feed information back to optimizer PLC slave nodes in different frequency bands. Each optimizer has its own number, thus achieving networked management. The distribution of photovoltaic power stations in this system is in a multi-branched linear structure, and node numbers of optimizers on each branch are sorted in an ascending order, as shown in FIG. 2. Each optimizer PLC slave node determines, based on its own node number, the operating frequency band for communicating with the inverter PLC master node.

In step S103, the master node communicates with the slave node corresponding to each frequency band in accordance with a preset communication manner.

The master node communicates with multiple slave nodes simultaneously through multiple frequency bands during a communication process.

It should be understood that, when the master node is required to communicate with multiple slave nodes, the master node communicates with the multiple slave nodes simultaneously through different frequency bands.

It should be noted that, the communication manner includes at least one of broadcast, multicast, unicast, and heartbeat broadcast. Different communication manners or a same communication manner may be adopted in different frequency bands for the master node to communicate with the slave nodes.

In the method according to the embodiments of the present disclosure, an operating frequency range in which the power line carrier operates is divided into multiple frequency bands and each frequency band corresponds to at least one slave node. The master node communicates with different slave nodes in different frequency bands, so that multiple slave nodes do not affect each other when communicating with the master node through multiple frequency bands, thereby improving the communication efficiency and reliability, and avoiding PLC bus congestion caused by communication between the master node and the slave nodes.

In an embodiment of the present disclosure, after the operating frequency range is divided into multiple frequency bands, at least one frequency band of the multiple frequency bands is configured as a broadcasting frequency band, and other frequency bands are data frequency bands. The broadcasting frequency band is a communication frequency band in which the master node communicates with all the slave nodes.

It should be understood that, in the broadcasting frequency band, the master node may communicate with all the slave nodes or may communicate with any one slave node, while the data frequency band only corresponds to one slave node. In the data frequency band, the master node only communicates with the slave node corresponding to the data frequency band.

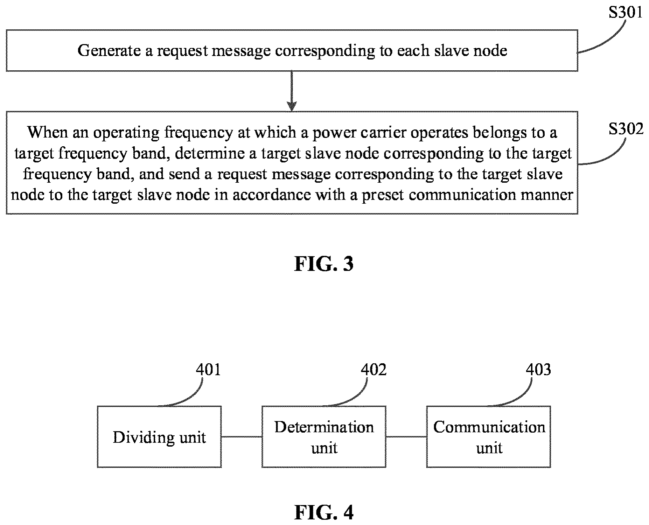

In the method according to an embodiment of the present disclosure, based on the above content of step S103, the process of communicating with the slave node corresponding to each frequency band in accordance with the preset communication manner is shown as FIG. 3, and may include steps S301 and S302.

In step S301, a request message corresponding to each slave node is generated.

A process of generating the request message corresponding to the slave node includes: acquiring data content of the master node, where the data content includes at least a machine number of the master node, a register starting address, and register data amount; and generating the request message of the slave node based on the data content and the node number of the slave node.

In an embodiment, the request message includes the data content and the node number. In addition, the data content of the request message may further include a function code, synchronization content, a data length, a register address, a register quantity, register data, a verification code, and the like. It should be noted that, the request message supports broadcast, multicast, and unicast. The data content in the request message has a total of 3 bytes, which includes the register starting address and the register data amount. The specific content is defined according to a protocol table of the application layer.

In step S302, when an operating frequency at which the power line carrier operates belongs to a target frequency band, a target slave node corresponding to the target frequency band is determined, and a request message corresponding to the target slave node is sent to the target slave node in accordance with the preset communication manner.

It should be understood that, when the power line carrier operates in a frequency band, the frequency band is the target frequency band, and a slave node corresponding to the target frequency band is the target slave node. The request message corresponding to the target slave node is sent to the target slave node in accordance with the communication manner.

The target frequency band may correspond to multiple slave nodes, and a slave node corresponding to the node number may be determined as the target slave node based on the node number in the request message.

It should be noted that, the slave node includes the machine number of the master node, and the node number of the slave node, and the like. When the master node is required to send a request message to the slave node, the request message may carry the node number of the slave node and the machine number of the master node. On receiving the request message, the slave node determines, based on the node number in the request message, whether the request message is a message specified to be sent to the slave node, and verifies the request message based on the machine number of the master node.

For example, the master node may send a request message to a first slave node through the broadcasting frequency band, and the request message carries a node number "1.1" of the first slave node. The master node sends the request message to all the slave nodes through the broadcasting frequency band. On receiving the request message, the first slave node may process the request message or make a response to the request message, and the other slave nodes directly ignore the request message.

It should be further noted that, the master node may communicate with respective slave nodes in different Boost strings, and respective slave nodes in the same Boost string may receive requests sent by different master nodes and communicate with the master nodes.

In an embodiment, the communication manner includes at least one of broadcast, multicast, unicast, and heartbeat broadcast. For each communication manner, a process of sending the request message corresponding to the target slave node to the target slave node in accordance with the communication manner includes at least one of the following operations.

When the communication manner is broadcast, the request message corresponding to the target slave node is broadcast to the target slave node based on the machine number of the master node. When the request message is sent via broadcast, whether the master node and the slave node are in the same network is determined based on the machine number of the master node, and the request message is broadcast to the slave node if the master node and the slave node are in the same network.

When the communication manner is multicast, the request message corresponding to the target slave node is multicast to the target slave node based on the machine number of the master node and the node number of the target slave node.

It should be noted that, in the same network, the master node may communicate with multiple slave nodes, and the multiple slave nodes may belong to different Boost strings. If the master node communicates with the slave nodes via multicast, whether the slave nodes multicasting with the master node belong to the same Boost string is determined based on the string numbers in the node numbers of the slave nodes, and multicast communication is performed if the slave nodes belong to the same string.

When the communication manner is unicast, the request message corresponding to the target slave node is unicast to the target slave node based on the node number and a sequence number of the target slave node.

It should be noted that, the slave node to be unicast may be determined based on the sequence number of the slave node in the node number.

When the communication manner is heartbeat broadcast, the request message corresponding to the target slave node is broadcast to the target slave node at a preset heartbeat time interval. The master node may periodically send a request message over each broadcast channel. The heartbeat time interval between every two successive request messages includes a fixed interval and a random delay. The fixed interval may be a value ranging from 20 milliseconds to 10 seconds with a step size of 1 millisecond. The random delay is a pseudo-random value ranging from 0 to 10 milliseconds, which is automatically generated by the system and added to the broadcast interval. This is mainly used to reduce the probability of signal conflict between multiple master nodes and improve the reliability of connection. The heartbeat broadcast may be used to enable both the master node and the slave node to mutually determine their statuses. Although the broadcast interval has a wide range of values, most devices follow the following value guideline of the broadcast interval:
(1) less than 100 milliseconds: suitable for radical devices;
(2) 100 to 500 milliseconds: commonly used fast broadcast, suitable for most devices; and
(3) 1000 to 2000 milliseconds: suitable for devices that connect to a gateway and do not have a high latency requirement.

In the present disclosure, in the process of dividing multiple frequency bands, a channel corresponding to one frequency band is determined as a broadcast channel, and channels corresponding to the remaining frequency bands are determined as data channels. Specifically, a frequency band is selected from the multiple frequency bands as a broadcasting frequency band, and the broadcasting frequency band indicates that the master node communicates with the slave node corresponding to the frequency band via broadcast.

It should be noted that, only the master node can actively perform communication via broadcast, multicast, unicast, and heartbeat broadcast. The slave node can only passively receive communications via broadcast, multicast, unicast, and heartbeat broadcast.

In an embodiment of the present disclosure, the master node may communicate with the slave node in various communication manners, ensuring the flexibility and reliability of the communication process.

In an embodiment of the present disclosure, after the master node sends the request message to the slave node, the slave node may establish, in response to the request message, a data connection with the master node. Further, the slave node may fail to establish the connection with the master node due to an abnormal response. Therefore, after the master node actively sends the request message to the slave node, the communication method further includes obtaining a communication result for the master node to communicate with each slave node, where the communication result is a communication success or a communication failure. The communication success means that the master node is in a connection with the slave node; and the communication failure means that the connection fails to be established.

In the present disclosure, the process of obtaining the communication result for the master node to communicate with each slave node may include: when the master node communicates with the slave node via broadcast or multicast, reading node information of the slave node, and determining a communication result of the slave node based on the node information.

It should be understood that, if the master node communicates with the slave node via broadcast or multicast, the slave node may not actively reply to the message information sent by the master node. The master node determines whether the communication with the slave node is successful by reading the node information of the slave node and determining whether the node information contains communication data for establishing communication with the master node to obtain a communication structure.

If the master node communicates with the slave node via unicast or heartbeat broadcast, a response message fed back by the slave node based on the request message corresponding to the slave node is received, and the communication result of the slave node is determined based on the response message.

It should be understood that, if the master node communicates with the slave node via unicast or heartbeat broadcast, the slave node may respond to the request message sent by the master node and feed the response message back to the master node. The response message fed back from the slave node may be a success response message or a failure response message.

The success response message may include a machine number, a node number, a function code, synchronization content, a data length, a register address, a verification value, and the like. The failure response message may include a machine number, a node number, a function code, synchronization content, a data length, an error code, a verification value, and the like. The success response message indicates that the communication result between the master node and the slave node is a communication success, and the failure response message indicates that the communication result between the master node and the slave node is a communication failure. In the failure response message, the error code may be "0x00" or customized.

The method according to the embodiments of the present disclosure may be applied to a monitoring system in a photovoltaic power station. A power line carrier of the system in the photovoltaic power station operates within a frequency range of 80kHz to 490kHz, and the frequency range is divided into multiple frequency bands including a broadcasting frequency band and a general communication frequency band, so that an inverter PLC master node can communicate with multiple optimizer PLC slave nodes simultaneously in different frequency bands, and can broadcast data to the optimizers as slave nodes, and the communications between them do not affect each other. This greatly improves the efficiency of PLC communication, and the transmission of a power line carrier signal on a power line is more reliable, robust and effective. The engineering application proves that the system has high communication efficiency and low error rate.

Corresponding to the communication method described in FIG. 1, a communication apparatus is further provided according to an embodiment of the present disclosure. The communication apparatus is applied to a communication system. The communication system includes at least one master node and at least one slave node. The communication apparatus is configured to implement the method in FIG. 1. The schematic structural diagram of the communication apparatus is shown in FIG. 4. The communication apparatus includes: a dividing unit 401, a determination unit 402 and a communication unit 403.

The dividing unit 401 is configured to divide a preset operating frequency range into multiple frequency bands. The operating frequency range is a frequency range in which the master node and the slave node are permitted to communicate with each other.

The determination unit 402 is configured to determine a slave node for communication corresponding to each of the frequency bands.

The communication unit 403 is configured to communicate with the slave node corresponding to each frequency band in accordance with a preset communication manner. The master node communicates with multiple slave nodes simultaneously through multiple frequency bands during a communication process.

In the communication apparatus according to an embodiment of the present disclosure, the operating frequency range in which a power line carrier operates is divided into multiple frequency bands, and each frequency band corresponds to one slave node. The master node communicates with different slave nodes in different frequency bands, avoiding mutual influence between the slave nodes, thereby improving the communication efficiency and reliability, and avoiding PLC bus congestion caused by communication between the master node and the slave nodes.

In the communication apparatus according to an embodiment of the present disclosure, the dividing unit 401 includes a first determination sub-unit and a dividing sub-unit.

The first determination sub-unit is configured to determine a quantity of the slave nodes.

The dividing sub-unit is configured to divide the operating frequency range into the multiple frequency bands based on the quantity of the slave nodes.

In the communication apparatus according to an embodiment of the present disclosure, the determination unit 402 includes a first acquisition sub-unit, a second determination sub-unit and a third determination sub-unit.

The first acquisition sub-unit is configured to acquire a node number corresponding to each slave node.

The second determination sub-unit is configured to determine a sort order of the slave nodes based on the node number corresponding to each slave node.

The third determination sub-unit is configured to determine the slave node for communication corresponding to each frequency band based on the sort order of the slave nodes.

The communication apparatus according to an embodiment of the present disclosure further includes a configuring unit.

The configuring unit is configured to configure at least one frequency band of the multiple frequency bands as a broadcasting frequency band. The broadcasting frequency band is a communication frequency band in which the master node communicates with the slave nodes.

In the communication apparatus according to an embodiment of the present disclosure, the communication unit 403 includes a first generation sub-unit and a sending sub-unit.

The first generation sub-unit is configured to generate a request message corresponding to each slave node.

The sending sub-unit is configured to determine, when an operating frequency at which a power line carrier operates belongs to a target frequency band, a target slave node corresponding to the target frequency band; and send the request message corresponding to the target slave node to the target slave node in accordance with the preset communication manner.

In the communication apparatus according to an embodiment of the present disclosure, the first generation sub-unit includes: a second acquisition sub-unit and a second generation sub-unit.

The second acquisition sub-unit is configured to acquire data content of the master node. The data content includes at least a machine number of the master node, a register starting address, and register data amount.

The second generation sub-unit is configured to generate the request message of the slave node based on the data content and a node number of the slave node.

In the communication apparatus according to an embodiment of the present disclosure, the communication manner includes at least one of broadcast, multicast, unicast, and heartbeat broadcast.

In the communication apparatus according to an embodiment of the present disclosure, for the communication unit sending the request message corresponding to the target slave node to the target slave node in accordance with the preset communication manner, the communication unit is further configured to perform:
broadcast the request message corresponding to the target slave node to the target slave node based on the machine number of the master node;
multicast the request message corresponding to the target slave node to the target slave node based on the machine number of the master node and a node number of the target slave node;
unicast the request message corresponding to the target slave node to the target slave node based on the node number of the target slave node and the machine number of the master node; and
broadcast the request message corresponding to the target slave node to the target slave node at a preset heartbeat time interval.

The communication apparatus according to an embodiment of the present disclosure further includes a result determination unit.

The result determination unit is configured to obtain a communication result for the master node to communicate with the slave node. The communication result is a communication success or a communication failure.

In the communication apparatus according to an embodiment of the present disclosure, the result determination unit includes a reading sub-unit and a receiving sub-unit.

The reading sub-unit is configured to read, when the master node communicates with the slave node via broadcast or multicast, node information of the slave node, and determine a communication result of the slave node based on the node information.

The receiving sub-unit is configured to receive, when the master node communicates with the slave node via unicast or heartbeat broadcast, a response message from the slave node and determine the communication result of the slave node based on the response message, where the response message is fed back by the slave node based on the request message corresponding to the slave node,.

For specific operation processes of the units and sub-units in the communication apparatus according to the embodiments of the present disclosure, reference may be made to corresponding contents of the communication method according to the embodiments of the present disclosure, which is not repeated here.

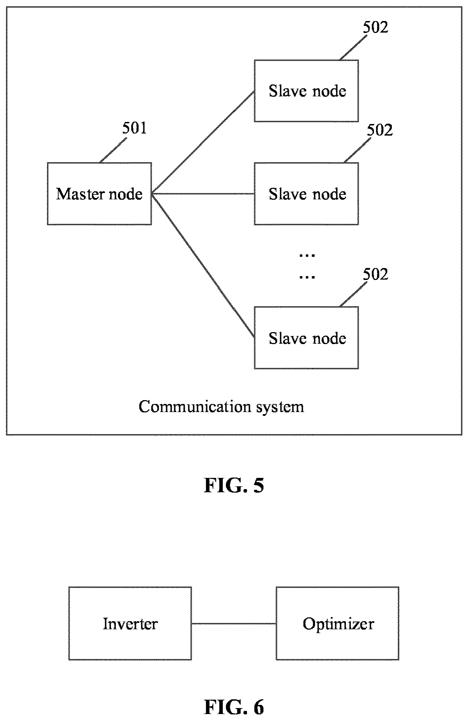

Based on the communication method according to the above embodiment, a communication system is further provided according to the present disclosure. The structure diagram of the communication system is shown in FIG. 5.

The communication system includes: at least one master node 501 and at least one slave node 502.

The master node 501 is configured to communicate with the at least one slave node 502 and perform the following processes:
dividing a preset operating frequency range into multiple frequency bands, where the operating frequency range is a frequency range in which the master node and the slave node are permitted to communicate with each other;
determining a slave node for communication corresponding to each of the frequency bands; and
communicating with the slave node corresponding to each of the frequency bands in accordance with a preset communication manner; where the master node communicates with multiple slave nodes simultaneously through the multiple frequency bands during a communication process.

In an embodiment of the present disclosure, the dividing the preset operating frequency range into the multiple frequency bands, includes:
determining a quantity of the slave nodes; and
dividing the operating frequency range into the multiple frequency bands based on the quantity of the slave nodes.

In an embodiment of the present disclosure, the determining the slave node for communication corresponding to each of the frequency bands includes:
acquiring a node number corresponding to each of the slave nodes, where the node number is a unique identification number of the slave node;
determining a sort order of all the slave nodes based on the node number corresponding to each of the slave nodes; and
determining the slave node for communication corresponding to each of the frequency bands based on the sort order of all the slave nodes.

In an embodiment of the present disclosure, the process further includes: configuring at least one frequency band of the multiple frequency bands as a broadcasting frequency band, where the broadcasting frequency band is a communication frequency band in which the master node communicates with all the slave nodes.

In an embodiment of the present disclosure, the communicating with the slave node corresponding to each of the frequency bands in accordance with the preset communication manner includes:
generating a request message corresponding to each of the slave nodes;
when an operating frequency at which a power line carrier operates belongs to a target frequency band,
determining at least one target slave node corresponding to the target frequency band and sending the request message corresponding to the at least one target slave node to the at least one target slave node in accordance with the preset communication manner.

In an embodiment of the present disclosure, for each of the slave nodes, generating the request message corresponding to the slave node includes:
acquiring data content of the master node, where the data content includes at least a machine number of the master node, a register starting address, and register data amount; and
generating the request message of the slave node based on the data content and a node number of the slave node.

In an embodiment of the present disclosure, the communication manner includes at least one of broadcast, multicast, unicast, and heartbeat broadcast.

In an embodiment of the present disclosure, the sending the request message corresponding to the target slave node to the target slave node in accordance with the preset communication manner includes at least one of:
broadcasting the request message corresponding to the target slave node to the target slave node based on the machine number of the master node;
multicasting the request message corresponding to the target slave node to the target slave node based on the machine number of the master node and a node number of the target slave node;
unicasting the request message corresponding to the target slave node to the target slave node based on the node number and a sequence number of the target slave node; and
broadcasting the request message corresponding to the target slave node to the target slave node at a preset heartbeat time interval.

In an embodiment of the present disclosure, the process further includes: obtaining a communication result for the master node to communicate with the slave node. The communication result is a communication success or a communication failure.

In an embodiment of the present disclosure, the obtaining the communication result for the master node to communicate with each of the slave nodes includes:
when the master node communicates with the slave node via broadcast or multicast, reading node information of the slave node and determining a communication result of the slave node based on the node information; and
when the master node communicates with the slave node via unicast or heartbeat broadcast, receiving, from the slave node, a response message and determining the communication result of the slave node based on the response message, where the response message is fed back by the slave node based on the request message corresponding to the slave node.

The at least one slave node is configured to receive the request message sent by the master node during communicating with the master node.

It should be noted that, in the communication system, one master node may communicate with at least one slave node, and one slave node may receive, from at least one master node, a request message, a message, data and the like.

In the present disclosure, as shown in FIG. 6, the communication system may be a power generation system in a photovoltaic power station, in which the master node may be an inverter and the slave node may be an optimizer.

The embodiments are described in this specification in a progressive manner. Various embodiments may refer to each other for the same or similar parts, and each embodiment places emphasis on a difference from other embodiments. In particular, the system or system embodiment is substantially similar to the method embodiment, and therefore is described relatively briefly. For relevant details, reference can be made to the corresponding description of the method embodiment. The system and system embodiment described above are only illustrative, in which the units described as separate components may or may not be physically separated, and the components shown as units may or may not be physical units, that is, they can be located in one place, or distributed over multiple network elements. Some or all of the modules may be adopted as needed to achieve the objective of the solutions in the embodiments of the present disclosure. Those skilled in the art can understand and implement the embodiments without any creative effort.

Those skilled in the art may further understand that, units and algorithm steps described in conjunction with the embodiments disclosed herein may be realized by electronic hardware, computer software or a combination thereof.

To clearly illustrate the interchangeability of hardware and software, the composition and steps of each embodiment have been described in general terms of functionality in the above description. Whether a function is to be implemented by hardware or software depends on a particular application and a design constraint of the technical solutions. Those skilled in the art may implement the described functions in various manners for each specific application. Such implementations should not be considered to be beyond the scope of the present disclosure.

The description of the embodiments herein enables those skilled in the art to implement or use the present disclosure. Various modifications to these embodiments are apparent to those skilled in the art, and the generic principles defined herein may be implemented in other embodiments without departing from the spirit or scope of the present disclosure. Therefore, the present disclosure is not to be limited to the embodiments shown herein but is conformed to the widest scope consistent with the principles and novel features disclosed herein.

## Claims

1. A communication method, **characterized in that** the communication method is applied to a communication system comprising at least one master node and at least one slave node, and the communication method comprises:
dividing, by the at least one master node, a preset operating frequency range into a plurality of frequency bands, wherein the operating frequency range is a frequency range in which the master node and the slave node are permitted to communicate with each other;
determining, by the at least one master node, at least one of the plurality of slave nodes for communication corresponding to each frequency band of the plurality of frequency bands; and
allowing the at least one master node to communicate with the at least one slave node corresponding to each frequency band in accordance with a preset communication manner, wherein the at least one master node communicates with the plurality of slave nodes simultaneously through the plurality of frequency bands during a communication process.

2. The communication method according to claim 1, wherein the dividing the preset operating frequency range into the plurality of frequency bands comprises:
determining a quantity of the plurality of slave nodes; and
dividing the operating frequency range into the plurality of frequency bands based on the quantity of the plurality of slave nodes.

3. The communication method according to claim 1, wherein the determining the at least slave node for communication corresponding to each frequency band comprises:
determining a node number corresponding to each slave node of the plurality of slave nodes, wherein the node number is a unique identification number of each slave node;
determining a sort order of the plurality of slave nodes based on the node number corresponding to each slave node; and
determining the at least one slave node for communication corresponding to each frequency band based on the sort order of the plurality of slave nodes.

4. The communication method according to any one of claims 1 to 3, further comprising:
configuring at least one frequency band of the plurality of frequency bands as a broadcasting frequency band, wherein the broadcasting frequency band is a communication frequency band in which the master node communicates with the plurality of slave nodes.

5. The communication method according to claim 1, wherein the communicating with the at least one slave node corresponding to each frequency band in accordance with the preset communication manner comprises:
generating a request message corresponding to each slave node of the plurality of slave nodes;
and
when an operating frequency at which a power line carrier operates belongs to a target frequency band,
determining at least one target slave node corresponding to the target frequency band; and sending the request message corresponding to the at least one target slave node to the at least one target slave node in accordance with the preset communication manner.

6. The communication method according to claim 5, wherein for each of the plurality of slave nodes, the generating the request message corresponding to the slave node comprises:
acquiring data content of the master node, wherein the data content comprises at least a machine number of the master node, a register starting address, and register data amount; and
generating the request message of the slave node based on the data content and a node number of the slave node.

7. The communication method according to claim 5, wherein the communication manner comprises at least one of broadcast, multicast, unicast, and heartbeat broadcast.

8. The communication method according to claim 7, wherein the sending the request message corresponding to the target slave node to the target slave node in accordance with the preset communication manner comprises at least one of:
broadcasting, in response to the communication manner being broadcast, the request message corresponding to the target slave node to the target slave node based on a machine number of the master node, wherein the machine number is to determine that the master node and the target slave node belong to a same network;
multicasting, in response to the communication manner being multicast, the request message corresponding to the target slave node to the target slave node based on a machine number of the master node and a string number in a node number of the target slave node, wherein the string number is to determine that at least one target slave node to receive the message request belongs to a same Boost string;
unicasting, in response to the communication manner being unicast, the request message corresponding to the target slave node to the target slave node based on the machine number of the master node and the node number of the target slave node; or
broadcasting, in response to the communication manner being heartbeat broadcast, the request message corresponding to the target slave node to the target slave node at a preset heartbeat time interval.

9. The communication method according to any one of claims 5 to 8, further comprising:
obtaining a communication result for the master node to communicate with each slave node, wherein the communication result is a communication success or a communication failure.

10. The communication method according to claim 9, wherein the obtaining the communication result for the master node to communicate with each slave node comprises:
when the master node communicates with the slave node via broadcast or multicast, reading node information of the slave node and determining a communication result of the slave node based on the node information; and
when the master node communicates with the slave node via unicast or heartbeat broadcast, receiving, from the slave node, a response message and determining the communication result of the slave node based on the response message, wherein the response message is fed back by the slave node based on the request message corresponding to the slave node.

11. A communication apparatus, wherein the communication apparatus is applied to a communication system comprising at least one master node and at least one slave node, and the communication apparatus comprises:
a dividing unit, configured to divide a preset operating frequency range into a plurality of frequency bands, wherein the operating frequency range is a frequency range in which the master node and the plurality of slave nodes are permitted to communicate with each other;
a determination unit, configured to determine at least one slave node for communication from the plurality of slave nodes corresponding to each frequency band of the plurality of frequency bands; and
a communication unit, configured to communicate with the at least one slave node corresponding to each frequency band in accordance with a preset communication manner; wherein the at least one master node communicates with the plurality of slave nodes simultaneously through the plurality of frequency bands during a communication process.

12. The communication apparatus according to claim 11, wherein the dividing unit comprises:
a first determination sub-unit, configured to determine a quantity of the plurality of slave nodes; and
a dividing sub-unit, configured to divide the operating frequency range into the plurality of frequency bands based on the quantity of the plurality of slave nodes.

13. The communication apparatus according to claim 11, wherein the second determination unit comprises:
a first acquisition sub-unit, configured to acquire a node number corresponding to each slave node of the plurality of slave nodes, wherein the node number is a unique identification number of each slave node;
a second determination sub-unit, configured to determine a sort order of the plurality of slave nodes based on the node number corresponding to each slave node; and
a third determination sub-unit, configured to determine the at least one slave node for communication corresponding to each frequency band based on the sort order of the plurality of slave nodes.

14. The communication apparatus according to claim 11, wherein the communication unit is configured to send a request message corresponding to a target slave node to the target slave node in accordance with a preset communication manner, and for sending the request message corresponding to the target slave node to the target slave node in accordance with the preset communication manner, the communication unit is further configured to:
broadcast, in response to the communication manner being broadcast, the request message corresponding to the target slave node to the target slave node based on a machine number of the master node, wherein the machine number is to determine that the master node and the target slave node belong to a same network;
multicast, in response to the communication manner being multicast, the request message corresponding to the target slave node to the target slave node based on a machine number of the master node and a string number in a node number of the target slave node, wherein the string number is to determine that at least one target slave node to receive the message request belongs to a same Boost string;
unicast, in response to the communication manner being unicast, the request message corresponding to the target slave node to the target slave node based on a machine number of the master node and a node number of the target slave node; and
broadcast, in response to the communication manner being heartbeat broadcast, the request message corresponding to the target slave node to the target slave node at a preset heartbeat time interval.

15. A communication system, comprising at least one master node and at least one slave node,
wherein
the at least one master node is configured to communicate with the at least one slave node and perform the communication method according to any one of claims 1 to 10; and
the at least one slave node is configured to receive a request message sent by the at least one master node during a process of communicating with the at least one master node.

16. The communication system according to claim 15, wherein the at least one master node each is an inverter, and the at least one slave node each is an optimizer.
